# EUROPEAN PATENT APPLICATION

(11) **EP 1 291 818 A1**
(43) Date of publication of application: **12.03.2003**
(21) Application number: 01810785.4
(22) Date of filing: 15.08.2001
(51) Int. Cl.: G06K 19/077

(54) **Transponder**

(71) Applicant: Datamars SA, 6930 Bedano-Lugano (CH)
(72) Inventor: Oggian, Sileno, 6930 Bedano (CH); Malfanti, Roberto, 6968 Sonvico (CH)
(74) Representative: AMMANN PATENTANWAELTE AG BERN

(57) **Abstract**

Two coil antennas (1, 2) are applied, for instance printed onto a sheet (3) of insulating material. An electronic circuit (4) is connected to terminals (1a, 1c) inside the one coil antenna (1). Thereupon, the sheet (3) is folded along a symmetry line (5), whereby the antennas (1, 2) are superposed with their outer terminals (1b, 2b) and inner terminals (1a, 2a) in covering position. By electrical interconnection of these pairs of terminals (1b, 2b; 1a, 2a), the antennas 1 and 2 are connected in series. The sheet is closed along its rim to form an envelope. An assembly of high efficiency is thereby obtained by a particularly economic and simple process.

## Description

This invention relates to an assembly according to the preamble of claim 1 or claim 2. Assemblies of this kind are particularly used in the field of transponders where said antenna is connected to the chip of the transponder. Thereby the chip and the antenna are produced separately, then assembled and placed into a housing. This means that three constituents have to be prepared separately and assembled. This is uneconomic and automatic assemblage may be difficult.

It is a first object of the present invention to provide a more economic product, which allows easier assemblage. This is achieved by the assembly according to claim 1 and the method according to claim 6. By the use of the carrier sheet of the printed coil antenna for forming an envelope of the assembly, no separate housing or capsule is required, and the envelope may be formed by simple folding and closing, e.g. by welding of the rims of the carrier sheet of the antenna.

It is a second object of the present invention to improve the efficiency of the printed antenna, and at the same time simplify its manufacture. One particular problem with printed coil antennas is the necessity of connecting the inner and outer end of the coil antenna to the electronic circuit. US-patent no. 5,444,223 clearly shows the problem of bridging the turns of the printed antenna from the outer antenna end to the inner end and to the electronic circuit respectively. A separate, electrically insulated connector is required, whereby the production, particularly automatic production, is rendered substantially more difficult. This is particularly true, if two superimposed coils should be connected in series for increasing the inductivity and thus, the efficiency of the antenna.

Claim 2 defines an assembly and claim 7 a method for producing the same, whereby said second object is achieved. Preferably the sheet carrying the antennas is simply folded along a line between the pair of coil antennas, whereby the antennas are superimposed, whereupon all connections may be established without any conductors bridging the turns of the coil antennas.

The invention will now be explained with reference to the drawing schematically illustrating an embodiment of the invention.
- Fig. 1: shows a sheet of non-conducting material with two printed antenna portions, and
- Fig. 2: shows a partial cross section along line II- II in Fig. 1 of the terminated assembly on a larger scale.

Two substantially identical coil antennas 1 and 2 are printed on a rectangular sheet 3 of non-conducting material, for instance polyester having a thickness of 50 µm. The printed coil antennas may be built or grown to the desired thickness by a galvanic, preferably microgalvanic process. Of course, all other methods available for obtaining the conductors on the non-conductive substrate may be used, such as applying to the substrate a conducting coating and etching away areas, which should be without conducting material. As an example the width of the coil conductors may be in the order of 5 to 10 µm. Each of the coils has an inner terminal, of which terminal 2a only is shown and an outer terminal 1b and 2b respectively. An electronic circuit 4, for instance the chip of a transponder, is connected between the inner terminal of antenna 1 and a terminal 1a. The antennas 1 and 2 are printed symmetrically relatively to a symmetry line 5. When the sheet 3 is folded along the symmetry line 5, the coils 1 and 2 are posed upon each other, with terminals 1b and 2b on one hand and terminals 1a and 2a on the other hand in covering position. If now terminals 1b and 2b are electrically connected together by soldering or bonding or by means of a connecting pin, coils 1 and 2 are connected in series. If terminals 1a and 2a are electrically connected in the same way, the coils are connected to the electronic circuit 4. In this way, a double-layer coil antenna of high efficiency is obtained by a particularly simple process and without conductors crossing the turns of the coil antennas for connecting the outer coil end to the electronic circuit inside the coil.

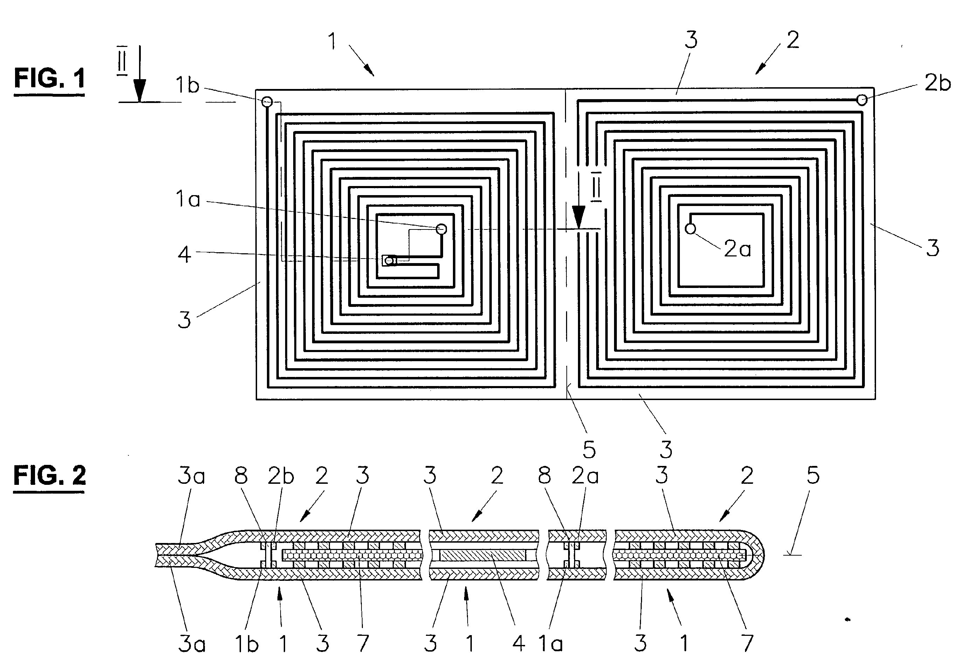

Fig. 2 schematically shows a partial cross section of the terminated assembly. Since the printed coils 1 and 2 are facing each other, an isolating sheet 7 is inserted between them. Terminals 1b and 2b and terminals 1a and 2a respectively are interconnected by a pin 8. The rims 3a of the sheet 3 are tightly connected by some method like welding.

In a slightly modified embodiment, the coils 1 and 2 might be coated with an insulating material, and this coating might leave terminals 1b, 2b, 1a and 2a free, so that said pairs of terminals 1b 2b and 1c, 2a are in direct conducting contact after folding of sheet 3. So no connecting pin 8 is required and thus, manufacture is further simplified.

In the foregoing description the separate coil antennas 1 and 2 as well as the superposed antennas 1 and 2 are called "antennas". Thus, in the specification and claims "antenna" means part of antenna or combined antenna.

Interconnection of terminals 1b, 2b and 1a, 2a respectively inside the folded sheet 3 is a problem, which may also be solved for instance by means of conducting adhesive or by means of beads of solder, which are heated and molten by means of a laser.

This invention also relates to the coil antenna per se as described above. In any case, the coil shape does not need to be square or rectangular, but may be circular or of any desired shape.

## Claims

1. An assembly of at least one antenna (1, 2) and at least one electronic circuit (4) connected thereto, wherein the antenna is a coil having a number of conductive turns on non-conducting sheet material (3), **characterized in that** said sheet material (3) has the shape of a closed envelope (3, 3a) which encloses said antenna (1, 2) and electronic circuit (4).

2. An assembly of at least one antenna (1, 2) and at least one electronic circuit (4) connected thereto, wherein the antenna (1, 2) is a coil having a number of conducting turns on non-conducting sheet material (3), **characterized by** at least one pair of superposed coil antennas (1, 2) with their outer ends (1b, 2b) connected to each other and with their inner ends connected to said electronic circuit (4).

3. An assembly according to claim 2, wherein said pair of coil antennas (1, 2) is applied on a common sheet material (3) with the sheet material at the outside forming an envelope of said assembly.

4. An assembly according to claim 3, wherein said sheet material (3) is folded along a line (5) between said coil antennas (1, 2).

5. An assembly according to any of the claims 1 to 4, wherein said electronic circuit (4) is a transponder chip.

6. A method for producing an assembly according to claim 1, comprising applying of at least one coil antenna (1, 2) onto a sheet (3) of non-conducting material, connecting said electronic circuit (4) to said antenna (1, 2), forming said sheet (3) around said antenna (1, 2) and electronic circuit (4), and interconnecting portions of the sheet (3) into a closed envelope for said antenna (1, 2) and electronic circuit (4).

7. A method for producing an assembly according to claim 2, comprising applying of a pair of coil antennas (1, 2) onto a sheet (3) of non-conducting material, connecting said electronic circuit (4) between the inner end of one coil antenna and a terminal (1a), folding the sheet along a line (5) with the coil antennas (1, 2) facing each other and with said electronic circuit 4(4) at the inside of the folded sheet (3), and with the outer ends of the coil antennas (1, 2) facing each other, electrically interconnecting the outer coil ends (1b, 2b) and electrically connecting said terminal to the inner end of the other coil antenna.

8. A method according to claim 6 or 7, wherein said coil antenna(s) (1, 2) is/are printed onto said sheet (3) and grown to the desired thickness by a galvanic, preferably microgalvanic process.

9. A method according to claim 6 or 7, wherein said coil(s) is/are manufactured by coating said sheet (3) of non-conducting material with conductive material, and etching away the coating to form the coil(s).

10. The coil antenna according to claim 2, wherein said inner ends are the terminals of the antenna.
